# EUROPEAN PATENT APPLICATION

(11) **EP 0 551 099 A1**
(43) Date of publication of application: **14.07.1993**
(21) Application number: 93100094.7
(22) Date of filing: 05.01.1993
(51) Int. Cl.: B29C 45/67

(54) **Multiple column shutter clamp**

(30) Priority: 09.01.1992 US 818349
(71) Applicant: HUSKY INJECTION MOLDING SYSTEMS LTD., Bolton Ontario L7E 5S5 (CA)
(72) Inventor: Schad, Robert D., Toronto Ontario M4V 2S9 (CA)
(74) Representative: Weiss, Peter, Dr. rer.nat.

(57) **Abstract**

The present invention relates to an improved clamp arrangement for press type devices such as an injection molding machine. The clamp arrangement comprises multiple columns (28) attached to a face (30) of a movable member such as a platen (18) having a mold half (24) affixed thereto, a shutter system for blocking movement of the columns (28) when the movable member (18) is in a particular position and a single clamp piston (38) for applying a clamping force to the movable member (18) via the shutter system and the columns (28). In a first embodiment of the present invention, the shutter system is formed by a shutter housing (64) mounted to the clamp piston (38) and two linearly movable shutters (66,68) mounted to the shutter housing (64). In a second embodiment of the present invention, the shutter system is formed by a rotary shutter plate (86) mounted to a non-rotatable shutter housing (64).

## Description

### BACKGROUND OF THE INVENTION

The present invention relates to a fast acting, energy efficient, accurate mold clamping arrangement for use in high speed injection molding machines. The clamping arrangement is a multiple column shutter type clamp arrangement.

A number of different types of mold clamping mechanisms are used in injection molding systems to apply a clamping force to a mold when the mold is in a mold closed position. One of the main classes of such mold clamping mechanisms is the hydraulically actuated column blocking type. In this type of clamping mechanism, separate hydraulic cylinders typically perform the mold clamping and mold stroking functions. This tends to optimize the required cylinder size and makes for efficient energy use.

U.S. Patent No. 3,697,212 to Herbst illustrates one such clamping system having a single column mounted to the moving platen, a single clamping piston and a rigid block abutting an end face of the piston. The clamping piston is annular and the single column passes completely through it when the mold is opened. The clamping force is applied towards the center of the moving platen by moving the clamping piston towards the mold and transmitting the mold clamping force via the block and the column.

U.S. Patent Nos. 3,156,014 to Wenger; 4,017,236 to Rees; 4,038,015 to Dawson and 4,201,533 to Holzschuh, Austrian Patent No. 229,008 and Japanese Patent Publication 58-14729 illustrate similar systems wherein a clamping force is applied to a mold via a single piston, a single central column and a blocking piece interposed between the clamping piston and the machine frame. The Rees and Holzschuh patents also show an annular clamping piston with the single column passing through it when the mold is opened.

In some known clamping systems, multiple columns are employed to distribute the clamping force to the moving platen so as to minimize deflection of the moving platen under full clamp pressure. In these systems, a column blocking arrangement is used in combination with the multi-column construction. The column blocking arrangement may take the form of either a single shutter plate, a swinging or rotary bayonet type blocking plate, or individual shutters for each column. The principal disadvantage associated with this type of approach is that extremely complicated multiple clamping devices are employed to generate the clamping force.

U.S. Patent No. 4,571,169 to Shima et al. exemplifies a system with such a complicated clamping arrangement. In this system, four columns attached to the moving platen are blocked by a rotary shutter which is acted on by four tiebar clamping pistons. Published European Patent Application No. 387,496 to OIMA, S.p.A. illustrates another complicated clamping system wherein individual sliding shutters block individual tiebar clamping pistons. In this system, the four columns are located along the upper and lower edges of the moving platen. As a result, the applied clamping pressure can cause the platen to tend to bend about its horizontal axis.

There are disadvantages to the multi-column approach used in this system. For example, the single shutter plate approach suffers from the disadvantage that its relatively large mass increases its inertia and makes quick movement more difficult and costly. The principal disadvantage of the individual plate approach is the cost associated with having to actuate and control each one independently.

In some clamping systems, a separate clamping piston arrangement is provided for each column. The disadvantage of this approach is that the space required for each clamp cylinder determines the smallest pitch between the columns. This means that only comparatively large machines in platen area size can be built this way. Further, there are additional costs associated with the construction and maintenance of four sets of clamping cylinders which have to be incurred.

Co-pending U.S. Patent Application No. 637,814 to Schad et al., assigned to the assignee of the present invention, illustrates an injection molding machine having individual gripping/clamping pistons acting on multiple columns attached to a moving platen. While this approach has the advantage of allowing individual control of each clamping unit and thereby altering the distribution of the clamping force acting on the moving platen, the additional clamping units and the controls therefor add system complication and considerable expense to the mechanisms.

Accordingly, it is an object of the present invention to provide an improved clamping arrangement for use with injection molding machines.

It is a further object of the present invention to provide a clamping arrangement as above which is fast acting.

It is yet a further object of the present invention to provide a clamping arrangement as above which is energy efficient.

Still another object of the present invention to provide a clamping arrangement as above which is accurate and optimizes distribution of the clamping forces.

Still other objects and advantages will become more clearer from the following description and drawings in which like reference numerals depict like elements.

### SUMMARY OF THE INVENTION

The foregoing objects and advantages are attained by the improved clamp arrangement of the present invention. In accordance with the present invention, the clamp arrangement may be used with an injection molding machine having a stationary platen, a moving platen, a clamp block and a plurality of tiebars extending between the stationary platen and the clamp block. The clamp arrangement broadly comprises at least two, preferably four, spaced apart columns affixed to the moving platen, means for blocking movement of the columns when the mold is in a closed position and a single clamp piston for applying the clamping force to the moving platen via the blocking means and the multiple columns. Use of the multiple columns in this arrangement allows better distribution of the clamping force to the moving platen and avoids platen bending.

In a first embodiment of the present invention, the blocking means comprises two shutters which move between retracted and blocking positions. Each of the shutters moves in a direction transverse to the direction of movement of the moving platen. The shutters are mounted to a shutter housing which slides along the tiebars and which is secured to the clamping piston.

The clamping piston in the clamping arrangement of the present invention slides within a clamping cylinder formed within the clamp block. The clamping piston has a rear surface contoured to match an inner surface of the clamp cylinder so that the amount of fluid needed to cause movement of the clamping piston is minimized. This shaping or contouring of the clamping piston achieves a speed improvement in the molding cycle as well as an energy saving.

In an alternative embodiment of the present invention, a rotary shutter plate is used to block travel of the column prior to clamping.

Other features of the present invention will be brought out in the following description.

### BRIEF DESCRIPTION OF THE DRAWINGS

Figure 1 illustrates a side view of a molding machine incorporating the clamp arrangement of the present invention with the mold in an open position;
Figure 2 illustrates a side view of the molding machine of Figure 1 with the mold in a closed position;
Figure 3 illustrates a sectional view taken along line 3-3 in Figure 1 illustrating the column clamping mechanism in a blocking position;
Figure 4 illustrates a sectional view taken along line 3-3 in Figure 1 illustrating the column clamping mechanism in a retracted position; and
Figures 5 and 6 illustrate an alternative embodiment of the clamping arrangement of the present invention employing a rotary shutter plate.

### DETAILED DESCRIPTION

The present invention relates to an improved clamping arrangement to be used in conjunction with injection molding machines. The clamping arrangement of the present invention is a multiple column and shutter type system which employs a single clamping piston positioned within a single clamping cylinder. The clamping arrangement of the present invention permits energy and time savings.

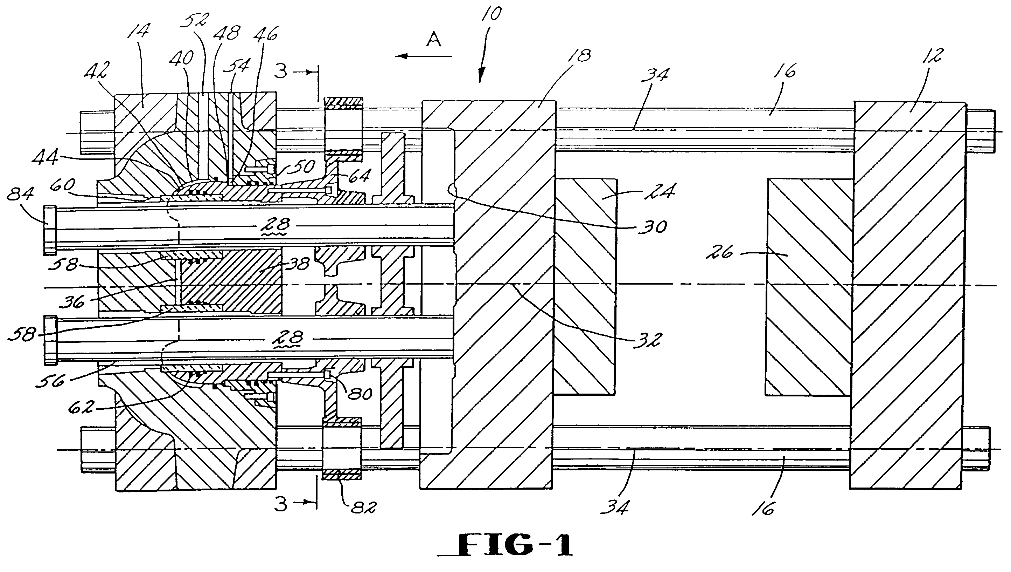

Referring now to the drawings, Figures 1 through 4 illustrate an injection molding machine or press 10 with the improved clamp arrangement of the present invention. The molding machine 10 has a stationary platen 12, a clamp block 14 and a plurality of tiebars 16 extending between the platen 12 and the clamp block 14. The clamp block 14 is preferably a casting designed to optimize strength per unit weight so as to minimize cost.

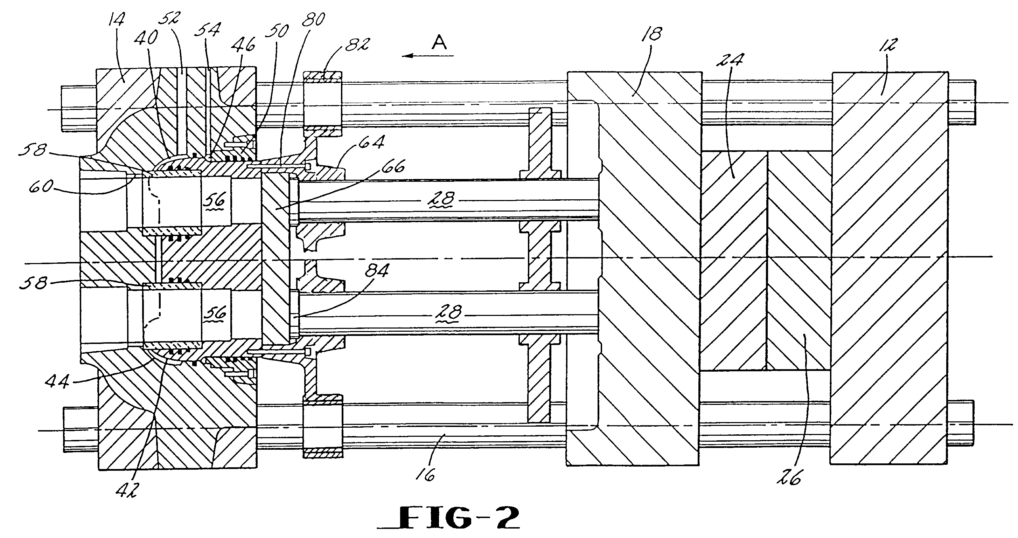

The machine 10 also has a moving platen 18 which moves along an axis parallel to the longitudinal axis of the tiebars from the open position shown in Figure 1 to the closed position shown in Figure 2. Movement of the platen 18 is caused by two fluid actuated stroke cylinders 20 and 22 shown in Figure 3. Mold halves 24 and 26 for forming injection molded articles are conventionally affixed to the platens 12 and 18.

Four spaced apart columns 28, forming part of the improved clamping arrangement of the present invention, are fixed to a face 30 of the moving platen 18. Any suitable means known in the art may be used to secure the columns 28 to the platen 18. Each of the columns has a head 84 at one end and is mounted to the moving platen at the opposite end. Preferably each column 28 is mounted to the platen 18 at a point approximately midway from the center 32 of the platen to the central axis 34 of a respective tiebar. By providing the columns in such a position, forces transmitted along the columns such as clamping forces are transmitted in a way which does not cause platen bending while insuring maximum transmission of the force.

The clamp block 14 has a central bore 36 and a clamp piston 38 movably mounted therein. The clamp piston 38 is used to generate a clamping force which is transmitted to the moving platen when it is in a mold closed position. The manner in which the clamping force is transmitted to the moving platen will be described in more detail hereinafter. The central bore 36 in the clamp block serves as a clamp cylinder.

A first chamber 40 is formed between a rear surface 42 of the clamp piston 38 and an inner surface 44 of the clamp cylinder 36. A second chamber 46 is formed between a forward face 48 of the clamp piston and a wall of a bushing 50 secured to the clamp block 14. Fluid passageways 52 and 54 are provided for allowing the introduction of fluid into and the removal of fluid from the chambers 40 and 46. The fluid passageways communicate with a source of fluid, a pump, and a drain (all not shown).

When fluid such as hydraulic oil is fed into the chamber 40, the clamp piston moves toward the stationary platen into a clamping position. When fluid is fed into the chamber 46, the clamp piston moves in the opposite direction into a released position.

The clamp piston slides and seals on bushings 58 screwed into the clamp block 14 by screws 60. O-rings 62 may be provided to insure effective sealing. As shown in Figure 2, the clamp piston is also sealed and aligned with the bushing 50. Once again O-rings 62 can be provided to insure effective sealing.

The clamp piston 38 is provided with one or more passageways 56 through which the columns 28 can pass as the moving platen moves between the mold open position shown in Figure 1 and the mold closed position shown in Figure 2. Preferably, one passageway 56 is provided for each column.

The rear face 42 of the clamp piston 38 is preferably contoured to match the inner surface 44 of the clamp cylinder. Shaping of the rear face 42 in this manner minimizes the amount of fluid required to energize the clamp piston resulting in time and energy savings.

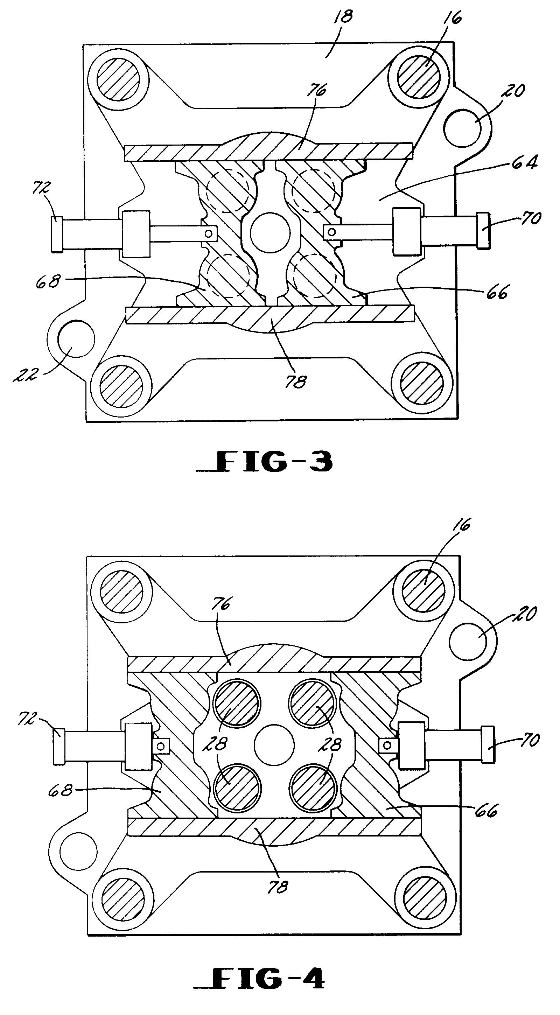

The clamp arrangement of the present invention in a first embodiment further includes a shutter housing 64 which slides on the tiebars 16 and two shutters 66 and 68 mounted to the shutter housing 64. The shutter plates 66 and 68 move between the blocking position shown in Figure 3 and the retracted position show in Figure 4. Fluid actuated cylinders 70 and 72 are provided for moving the shutters between the blocking and retracted positions. Movement of the shutters occurs along an axis substantially transverse to the axis of movement of the moving platen 18.

Any suitable means known in the art may be used to mount the shutter plates 66 and 68 to the shutter housing 64. Preferably, the shutter 66 and 68 slide within a passageway 74 defined by an upper channel member 76 and a lower channel member 78. The channel members 76 and 78 are preferably an integral part of the shutter housing 64.

The shutter housing 64 is bolted to the clamp piston 38 by bolts 80 and therefore moves with the clamp piston. Bushings 82 are provided to allow the shutter plate to slide along the tiebars 16.

In operation, the moving platen 18 is moved from the mold open position of Figure 1 to the mold closed position of Figure 2 by cylinders 20 and 22. After the mold has reached the mold closed position, the cylinders 70 and 72 are actuated to move the shutter 66 and 68 from the retracted position shown in Figure 4 to the blocking position shown in Figure 3. In the blocking position, the shutters 66 and 68 contact the heads 84 of the columns 28 and prevent movement of the columns in the direction "A".

Fluid is then introduced into the chamber 40 via the passageway 52 to cause the clamping piston to move from its retracted position to its clamping position. The clamping force created by the movement of the clamping piston 38 is transmitted to the moving platen 18 via the shutters 66 and 68 and the columns 28. By the clamping arrangement of the present invention, the amount of clamping force transmitted to the moving platen is maximized and bending of the moving platen is avoided.

The clamp arrangement is opened by first releasing the fluid pressure in the chamber 40 and then introducing fluid under pressure into the chamber 46. This causes the clamp piston 38 to move in the direction "A" and open the mold a short distance. This is known as "mold break". Movement of the piston 38 pulls the shutter housing 64 via the bolts 80. The shutter plate acts on the heads 84 of the columns connected to the platen 18 and thereby causes the moving platen 18 to retract. The shutters 66 and 68 are then moved from their blocking position to the retracted position. This allows the columns to pass into the passageways 56 in the clamp piston 38. The stroke cylinders 20 and 22 are then energized to move the platen 18 to the mold open position shown in Figure 1.

One advantage to the clamping arrangement of the present invention is that by employing multiple columns and one clamp cylinder, the spacing of the columns can be such that the clamp force distribution is maximized at the moving platen, even when smaller machines, with reduced tiebar spacing, are built. As previously discussed, systems which employ one clamp piston for each column have the disadvantage that the space required for each clamp cylinder determines the smallest pitch between the columns. This means that only comparatively large machines in platen size area can be built this way. Furthermore, the additional cost of construction and maintenance of four sets of clamping cylinders must be incurred.

A second advantage to the clamping arrangement of the present invention is that the speed of the clamp and thus mold cycle time is improved. The shutters 66 and 68 can be comparatively lighter for a given clamp force than similar prior art shutters. As previously discussed, most prior art machines using a column blocking arrangement in combination with a multi-column constructions used either a single shutter plate, swinging or rotary bayonet type shutters or individual shutters for each column. The disadvantage of a single plate is that its larger mass increases its inertia and makes quick movement more difficult and costly. The disadvantage of individual plates is the cost associated with having to actuate and control each one independently. The present invention improves speed of actuation and reduces cost of construction.

One of the features of the present invention which enhances speed is the contouring of the clamp piston to conform with the inner shape of the clamp cylinder in the clamp block. This contouring reduces the volume of fluid to be compressed during the clamp actuation part of the mold cycle. As a result, time savings and energy savings are achieved. The energy savings result from the reduced pumping energy required to deliver the needed amount of fluid at an elevated pressure to actuate the clamp piston.

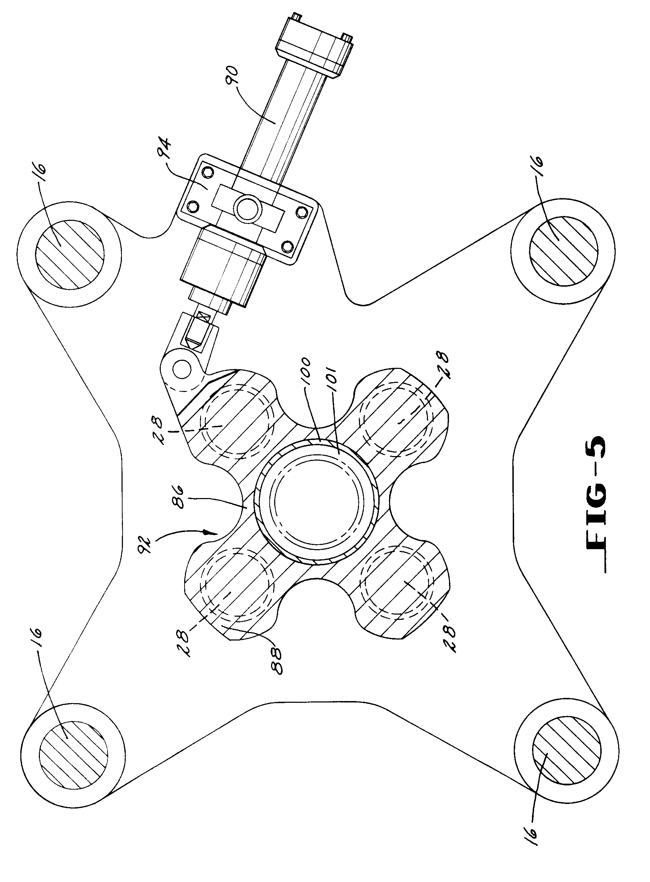

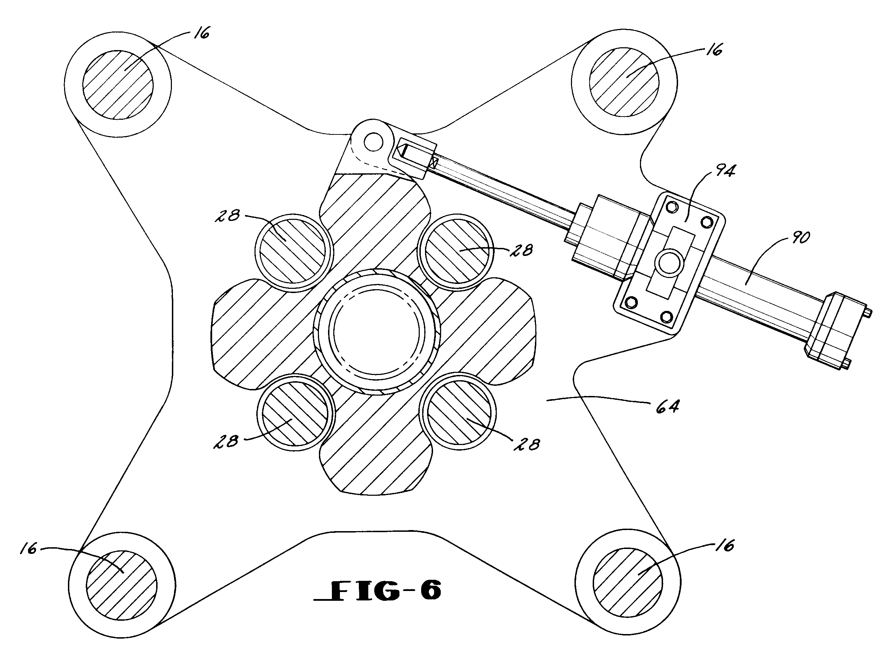

While the clamping arrangement of the present invention has been described as using linearly movable shutters 66 and 68 to block movement of the columns mounted to a shutter housing 64, it would work equally well and in substantially the same fashion using a rotary shutter plate 86 such as that shown in Figures 5 and 6.

In this type of system, the rotary shutter plate 86 is substituted the linearly movable shutters 66 and 68. The shutter plate 86 is mounted to the slidable, non-rotatable shutter housing 64 affixed to the clamp piston 38. Any suitable means known in the art may be used to affix the shutter plate 86 to the housing 64 so that the plate 86 is capable of rotary movement. For example, as shown in Figure 5, bushing 100 in plate 86 rotates around hollow pin 101 fixed to housing 64.

As seen in Figures 5 and 6, the shutter plate 86 has integral members 88 for blocking movement of the columns when the mold is in the mold closed position and spaces 92 for allowing the columns to pass when the plate 86 is moved to a retracted position. In lieu of the cylinders 70 and 72, a fluid actuated cylinder 90 is provided to rotate the plate 86 between the blocking position shown in Figure 5 and the retracted position shown in Figure 6. The cylinder 90 is mounted to the shutter housing 64 by a suitable mounting plate 94 or some other suitable connector.

The operation of this type of system is similar to that of the previously described system. The moving platen 18 is moved to a mold closed position. After it has reached that position, the rotary shutter plate 86 is moved to its blocking position and clamp piston is actuated to apply a clamping force to the moving platen. The clamping force is transmitted to the moving platen via the rotary shutter plate 86 and the columns 28.

After molding has been completed, the piston 38 actuated to cause mold break. After the mold has been broken, the rotary shutter plate 86 is moved to its retracted position by the cylinder 90 to allow the columns 28 to pass into the passageways 56 in the clamp piston 38. Thereafter, the moving platen is moved to its mold open position by the stroke cylinders 20 and 22.

The same advantages are achieved with this clamping arrangement as are achieved with the clamping arrangement employing the linearly movable shutters.

While the present invention has been described in the context of injection molding machines for forming molded articles, it should be recognized that the clamp arrangement of the present invention may also be used on simple presses having two press members which move into contact with each other. The clamp arrangement may be used to apply a clamping force to one of the press members.

It is apparent that there has been provided in accordance with this invention a multiple column shutter clamp arrangement which fully satisfies the objects, means, and advantages set forth hereinbefore. While the invention has been described in combination with specific embodiments thereof, it is evident that many alternatives, modifications and variations will be apparent to those skilled in the art in light of the foregoing description. Accordingly, it is intended to embrace all such alternatives, modifications, and variations as fall within the broad scope and the spirit of the appended claims.

## Claims

1. An improved clamp arrangement for use with an injection molding machine (10) having a stationary platen (12) and a moving platen (18), said clamp arrangement comprising:
means for applying a clamping force to said moving platen (18) when said moving platen (18) is in a mold closed position;
said clamping force applying means comprising at least two spaced apart columns (28) mounted to said moving platen (18), each of said columns (28) having a head portion (84);
said clamping force applying means further comprising means (66, 68, 86) for blocking movement of said columns (28) when said moving platen (1) is in said mold closed position and single clamp piston (38) for applying said clamping force to said platen (18) via said blocking means (64, 68, 86) and said columns (28).

2. The clamp arrangement of claim 1 characterized in that said molding machine (10) has a clamp block (14) and a plurality of tiebars (16) extending between said clamp block (14) and said stationary platen (12); and
each of said columns (28) is positioned approximately midway between a center point (32) on said moving platen and a central axis (34) on a respective tiebar (16) so as to maximize the clamping force applied to said moving platen (18) while substantially avoiding bending of the moving platen (18).

3. The clamp arrangement of claim 1 or 2 wherein four columns are mounted to said moving platen (18).

4. The clamp arrangement of one of claims 1 til 3 characterized in that said moving platen (18) moves along a first axis between said mold closed position and a mold open position; and
said blocking means comprises at least one shutter (66, 68, 86) movable in a direction transverse to said first axis.

5. The clamp arrangement of claim 4 characterized in that at least one fluid actuated cylinder unit (70, 72, 90) is provided for moving said at least one shutter (66, 68, 86) between a retracted position and a blocking position.

6. The clamp arrangement of claim 4 or 5 characterized in that said clamp piston (38) applies said clamping force to said moving platen (18) by pushing against said at least one shutter (66, 68, 86) and having said at least one shutter (66, 68, 86) push against the head portions (84) of said columns (28).

7. The clamp arrangement of one of claims 4 til 6 characterized in that said molding machine (10) has a clamp block (14) and a plurality of tiebars (16) extending between said clamp block (14) and said stationary platen (12); and
said clamping force applying means further comprising a shutter housing (64) slidably movable along said tiebars (16).

8. The clamp arrangement of claim 7 characterized in that said at least one shutter comprises two linearly movable shutters (66, 68) mounted to said shutter housing (64).

9. The clamp arrangement of claim 7 characterized in that said at least one shutter comprises a rotary shutter plate (86) mounted to said shutter housing (64).

10. The clamp arrangement of one of claims 7 til 9 wherein said shutter housing (64) is secured to said clamp piston (38).

11. The clamp arrangement of claim 10 characterized in that said clamp blocking (14) has bushings (58) upon which said clamp piston (38) slides and seals and
additional bushings (82) for permitting said shutter housing (64) to slide along said tiebars (16).

12. The clamp arrangement of at least one of claims 2 til 11 characterized in that a clamp cylinder (36) is arranged within said clamp block (14) and said clamp piston (38) is slidable within said clamp cylinder (36).

13. The clamp arrangement of claim 12 characterized in that fluid passageways (52, 54) are provided for introducing fluid into said clamp cylinder (36) to cause movement of the clamp piston (38) between clamped and released positions.

14. The clamp arrangement of claim 13 characterized in that the clamp piston (38) has a rear surface (42) contoured to match an inner surface (44) of said clamp cylinder (36) for enabling the amount of fluid needed to cause movements of the clamp piston (38) to be minimized.

15. The clamp arrangement of at least one of claims 1 til 14 characterized in that said clamp piston (38) has a plurality of passageways (56) through which said columns (28) move as said moving platen (18) moves from said mold closed position to said mold open position.

16. A clamp arrangement for use on a machine having first and second members (10, 18) with said first member (10) being stationary and said second member (18) being movable relative to said first member (10), said clamp arrangement comprising:
a multiplicity of columns (28) attached to said second member (18);
means (66, 68, 86) for blocking movement of said columns (28) when said second member (18) is in a desired position; and
a single piston (38) for applying a clamping force to said second member (18), said clamping force being applied via said blocking means (66, 68, 86) and said columns (28).

17. The clamp arrangement of claim 16 characterized in that said machine has a third member (14) which is stationary and
a cylinder (36) formed within said third member (14) in which said piston (38) slides between a released position and a clamping position.

18. The clamp arrangement of claim 17 characterized in that said piston (38) has multiple passageways (56) for receiving said columns (28).

19. The clamp arrangement of claim 17 or 18 characterized in that said cylinder (36) has an inner surface (44) and said piston (38) is contoured to match the shape of said inner surface (44).

20. The clamp arrangement of one of claims 16 til 19 characterized in that said blocking means comprises a shutter housing (64) mounted to said piston (38) and two linearly movable shutters (66, 68) mounted to said shutter housing (64).

21. The clamp arrangement of one of claims 16 til 19 characterized in that said blocking means comprises a shutter housing (64) mounted to said piston (38) and a rotating shutter plate (86) mounted to said shutter housing (64).
